# EUROPÄISCHE PATENTSCHRIFT

(11) **EP 1 544 374 B1**
(45) Veröffentlichungstag und Bekanntmachung des Hinweises auf die Patenterteilung: **03.10.2007**
(21) Anmeldenummer: 04028383.0
(22) Anmeldetag: 01.12.2004
(51) Int. Cl.: E04F 11/16

(54) **Treppenstufenverkleidung mit Verkleidungselementen in Form einer Granulatschicht mit mineralischen Substanzen, Treppe mit einer solchen Verkleidung und Verwendung einer solchen Verkleidung**
Covering for stair treads with covering elements in the form of a granular layer comprising mineral substances, stair with such a covering and use of such a covering
Revêtement de marches d'escalier avec des éléments de revêtement sous la forme de couche de granulats comprenant des substances minérales, escalier avec un tel revêtement et usage d'un tel revêtement

(30) Priorität: 18.12.2003 DE 20319739 U
(43) Veröffentlichungstag der Anmeldung: 22.06.2005
(73) Patentinhaber: Häderer Franz, 97297 Waldbüttelbrunn-Rossbrunn (DE)
(72) Erfinder: Häderer Franz, 97297 Waldbüttelbrunn-Rossbrunn (DE)
(74) Vertreter: von den Steinen, Axel

(56) Entgegenhaltungen:
- EP-A- 1 008 702
- WO-A-95/00569
- DE-A1- 10 040 489
- DE-U1- 9 315 339
- DE-U1- 9 418 912
- DE-U1- 29 710 907
- US-A- 5 713 166

## Beschreibung

Die Erfindung betrifft eine Treppenstufenverkleidung zur zumindest teilweisen Verkleidung der Sichtflächen an einer Treppe nach dem Oberbegriff des Anspruchs 1, eine Treppe mit einer solchen Verkleidung sowie die Verwendung einer solchen Verkleidung.

Bei älteren Treppen besteht häufig ein erheblicher Renovierungsbedarf, wenn die Treppenstufen durch häufigen Gebrauch verschlissen bzw. durch Witterungseinflüsse unansehnlich geworden sind. Der Austausch von Treppenstufen ist zumeist außerordentlich aufwändig, weshalb alternativ zum Austausch gattungsgemäße Treppenstufenverkleidungen bei der Renovierung von Treppen eingesetzt werden. Diese Treppenstufenverkleidungen zeichnen sich durch Verkleidungselemente aus, die an den Trittstufen und/oder Setzstufen befestigt werden und dadurch die Sichtseite der Trittstufen bzw. Setzstufen zumindest abschnittsweise überdecken.

Eine solche Treppenstufenverkleidung ist beispielsweise aus der DE 196 22 329 A1 bekannt. Die Verkleidungselemente sind dabei aus Holz hergestellt, was allerdings zu Problemen bei der Verschleißfestigkeit und der Witterungsbeständigkeit, insbesondere bei Treppen im Außenbereich, führt.

In der DE 195 03 297 A1 ist ein weiterer Bausatz zur Renovierung von Treppenstufen beschrieben, bei dem die Trittstufen durch Verwendung eines Befestigungsprofils mit Teppichboden belegt werden können.

Weiter ist es bekannt, dass keramische Fliesen zur Abdeckung von Treppenstufen Verwendung finden können. Aus der DE 94 18 912 U1 sind Verkleidungsplatten zur Verkleidung von Treppenstufen bekannt, die aus einem Belag und einer den Belag stützenden Unterplatte bestehen. Die Unterplatte kann aus Granulatflocken hergestellt sein.

Aus der DE 297 10 907 U1 ist eine Treppenrenovierung bekannt, bei der die Treppenstufen mit mineralischem Kunststein belegt wird. Dieser Kunststein besteht aus kunstharzgebundenen Mineralien und kann deshalb aufgrund seiner Feuchteunempfinlichkeit bevorzugt im Außenbereich eingesetzt werden.

Nachteilig an diesen Verkleidungselementen zur Treppenrenovierung ist es, dass aufkommende Feuchtigkeit und Nässe, insbesondere Regenwasser nur oberflächlich abfließen kann. Dies führt bei Unebenheiten in der Oberfläche der Treppe, wie sie bei der Renovierung von bestehenden Treppen letztendlich unvermeidbar sind, zur Bildung von unerwünschten Pfützen. In diesen Pfützen trocknet das Wasser nur sehr langsam ab und bildet unschöne Feuchtigkeitsflecken.

Weiter Nachteilig an den bekannten Verkleidungselementen aus mineralischen Substanzen ist deren geringe Bruchfestigkeit. Weist die Oberfläche der zu renovierenden Treppe Unebenheiten auf, müssen diese Unebenheiten vor dem Verlegen der Verkleidungselemente nivelliert werden, um ein zerbrechen der Platten nach dem Verlegen zu vermeiden.

Alternativ dazu ist es auch bekannt (siehe DE 297 10 907 U1) auf der Rückseite der Verkleidungselemente zur Erhöhung der Bruchfestigkeit eine Trägerplatte als Armierung für die mineralische Schicht zu befestigen. Diese Trägerplatte verursacht aber hohe Zusatzkosten und erhöht zudem in unerwünschter Weise das Gewicht.

Aus der WO95/00569 A1 ist ein offenporiges Formteil bekannt, das als Bodenbelag oder Bauplatte Verwendung finden kann. Die Offenporigkeit ermöglicht das Abfließen von Wasser durch das Formteil. Dieses Formteil kann als Treppenstufenverkleidung verwendet werden und weist alle Merkmale des Oberbegriffs des Anspruchs 1 auf.

Ausgehend von diesem Stand der Technik ist es Aufgabe der vorliegenden Erfindung, eine neuartige Treppenstufenverkleidung vorzuschlagen, die eine hohe Verschleißfestigkeit und eine gute Witterungsbeständigkeit aufweist, dabei den einfachen Ausgleich von vorhandenen Unebenheiten im Untergrund ermöglicht und die Bildung von Pfützen vermeidet. zugleich in einfacher Weise verarbeitbar ist.

Diese Aufgabe wird durch eine Treppenstufenverkleidung nach der Lehre des Anspruchs 1 gelöst, sowie durch eine Treppe mit einer solchen Verkleidung und die Verwendung einer solchen Verkleidung.

Vorteilhafte Ausführungsformen der Erfindung sind Gegenstand der Unteransprüche.

Gattungsgemäß werden zur Herstellung der Treppenstufenverkleidung Verkleidungselemente verwendet, die im Wesentlichen aus einer Granulatschicht aufgebaut sind.

Die Granulatschicht selbst ist aus mineralischen Substanzen, beispielsweise Quarzgranulat, Granitgranulat oder Marmorgranulat, hergestellt

Die Bindung des Granulats ist offenporig und damit wasserdurchlässig, damit Feuchtigkeit und insbesondere Regenwasser nach unten absickern kann.

Das Granulat ist dabei erfindungsgemäß mittels eines Bindemittels, insbesondere mit einem Reaktionsharzkleber, derart gebunden, dass die Granulatschicht elastisch verformbar, insbesondere biegsam, ist. Diese aus einer Granulatschicht hergestellten Verkleidungselemente zeichnen sich durch hervorragende Tritteigenschaften und sehr gute Verschleißfestigkeit aus. Auf Grund der Granulatstruktur können die Verkleidungselemente in einfacher Weise bearbeitet werden, um die notwendigen Einbaumaße herzustellen. Dadurch wird der Bearbeitungsaufwand bei der Montage der Treppenstufenverkleidung erheblich verringert. Auf Grund ihrer elastischen Verformbarkeit können sich die Granulat-Verkleidungselemente sehr gut an Unebenheiten im Untergrund, wie sie insbesondere bei ausgetretenen Treppenstufen auftreten können, anlegen, so dass aufwändige Vorarbeiten an den Trittstufen bzw. Setzstufen, beispielsweise das Ausspachteln solcher Unebenheiten, entfallen.

In welcher Weise die Granulat-Verkleidungselemente an den Stufen der Treppe befestigt werden, ist grundsätzlich beliebig. Nach einer bevorzugten Ausführungsform wird dazu eine Profilleiste eingesetzt, die Befestigungsprofilabschnitte zur Festlegung der an den Verkleidungselementen vorhandenen Seitenkanten aufweist. Die Profilleiste wird bei der Montage der Treppenstufenverkleidung an der Trittkante der Trittstufe befestigt, so dass die Vorderkante des auf der Trittstufe befestigten Verkleidungselements bzw. die Oberkante des an der Setzstufe befestigten Verkleidungselements in die dafür jeweils vorgesehenen Befestigungsprofilabschnitte der Profilleiste eingesteckt werden kann. Vorzugsweise wird die Profilleiste aus Aluminium hergestellt, da dieses Material gut bearbeitbar ist und zugleich eine ausreichende Verschleißfestigkeit aufweist.

Die Montagearbeiten bei Herstellung der Treppenstufenverkleidung werden erheblich vereinfacht, wenn die Unterkante des an der Setzstufe befestigten Verkleidungselements an der Oberseite der darunter liegenden Trittstufe zur Anlage kommt bzw. nur einen geringen unausgefüllten Abstand zur Trittstufe aufweist, wobei zugleich zwischen der Hinterkante des auf der Trittstufe befestigten Verkleidungselements und der Vorderseite des an der Setzstufe befestigten Verkleidungselements ein geringfügiger Spalt gebildet wird. Bei Verwendung dieser Ausführungsform wird zunächst das zur Verkleidung der Setzstufe vorgesehene Verkleidungselement auf ein Maß gebracht, so dass dieses Verkleidungselement die gesamte Setzstufe ausgehend von der Trittkante bis hinunter zur Oberseite der darunter liegenden Trittstufe überdeckt. Sobald das die Setzstufe verkleidende Verkleidungselement befestigt ist, wird an der darunter liegenden Trittstufe das korrespondierende Verkleidungselement befestigt. Dieses Verkleidungselement ist dabei auf ein Maß zugeschnitten, so dass zwischen der Vorderseite des an der Setzstufe befestigten Verkleidungselements und der Hinterkante der Trittstufe ein geringfügiger Spalt verbleibt. Dieser stumpfe Stoß zwischen den beiden einander zugeordneten Verkleidungselementen ist sehr einfach herstellbar und ergibt eine hervorragende Optik.

Die Optik am Übergang zwischen dem an der Setzstufe befestigten Verkleidungselement und dem an der darunter liegenden Trittstufe befestigten Verkleidungselement kann noch dadurch verbessert werden, dass dieser Übergang mit einem Füllstoff ausgefüllt, beispielsweise ausgespachtelt, wird. Als Füllstoff sollte dabei vorzugsweise ein Granulatmaterial verwendet werden, das dem Granulatmaterial der Verkleidungselemente entspricht. Bei Verwendung eines solchen Granulatmaterials kann nach Aushärtung des Füllstoffes der Übergang zwischen den Verkleidungselementen einerseits und dem Füllstoff andererseits optisch kaum mehr wahrgenommen werden.

Um die Verkleidungselemente dauerhaft mit den Treppenstufen zu verbinden, sollten die Verkleidungselemente vorzugsweise vollflächig mit den Trittstufen bzw. Setzstufen verklebt sein. Als Kleber zur Verklebung der Verkleidungselemente auf den Treppenstufen haben sich dabei Polyurethankleber besonders bewährt.

Grundsätzlich ist es zur Verwirklichung der Erfindung ausreichend, wenn die Verkleidungselemente einschichtig aus einer Granulatschicht gebildet sind. Nach einer bevorzugten Ausführungsform ist auf dieser Granulatschicht jedoch ein Rücken, d.h. eine Rückenschicht aus Folien-, Vlies- oder Textilmaterial, vorgesehen. Diese Rückenschicht ist mit der Granulatschicht dauerhaft verbunden, beispielsweise verklebt. Durch die Rückenschicht wird die Gefahr von Beschädigungen der Granulatschicht durch Ausbrechen an den Rändern erheblich verringert.

Das Zuschneiden der Verkleidungselemente auf das notwendige Einbaumaß wird erheblich dadurch vereinfacht, dass die Rückenschicht mit einem einfachen Schneidwerkzeug, insbesondere einem Teppichmesser, durchtrennbar ist. Zum Ablängen eines Verkleidungselements auf das notwendige Einbaumaß wird dann die Rückenschicht mit dem Schneidwerkzeug an der entsprechenden Stelle durchtrennt und anschließend die Granulatschicht über einer geeigneten Kante durchgebrochen.

Als besonders geeignet zur Bildung der Rückenschicht haben sich Gewebepapiere erwiesen, die eine ausreichende Verrottungsfestigkeit aufweisen sollten.

Zur Erzielung bestimmter optischer Effekte lassen sich Granulatanteile der Granulatschicht mit unterschiedlichen Farben mischen. Die Granulatschicht kann außerdem Granulatanteile mit unterschiedlichen Körnungen, d.h. feines Granulat, mittelfeines Granulat, grobes Granulat oder sehr grobes Granulat, enthalten.

An welcher Art von Treppen die Treppenstufenverkleidung befestigt wird, ist grundsätzlich beliebig. Besonders große Vorteile bietet die erfindungsgemäße Treppenstufenverkleidung an Betontreppen, die im der Witterung ausgesetzten Außenbereich angeordnet sind.

Besonders große Vorteile bietet die erfindungsgemäße Treppenstufenverkleidung bei Treppen im der Witterung ausgesetzten Außenbereich oder in Feuchträumen, da die Treppen in diesen Bereichen häufig sehr großen Beanspruchungen ausgesetzt sind und deshalb vielfach renoviert werden müssen.

Eine Ausführungsform der Erfindung ist in den Zeichnungen schematisch dargestellt und wird nachfolgend beispielhaft erläutert.

Es zeigen:
- **Fig. 1**: eine mit Verkleidungselementen verkleidete Treppe im Querschnitt;
- **Fig. 2**: die Treppe gemäß **Fig. 1** in einem an der Trittkante vergrößerten Ausschnitt;
- **Fig. 3**: die Treppe gemäß **Fig. 1** in einem am Übergang zwischen Trittstufe und Setzstufe vergrößerten Ausschnitt.

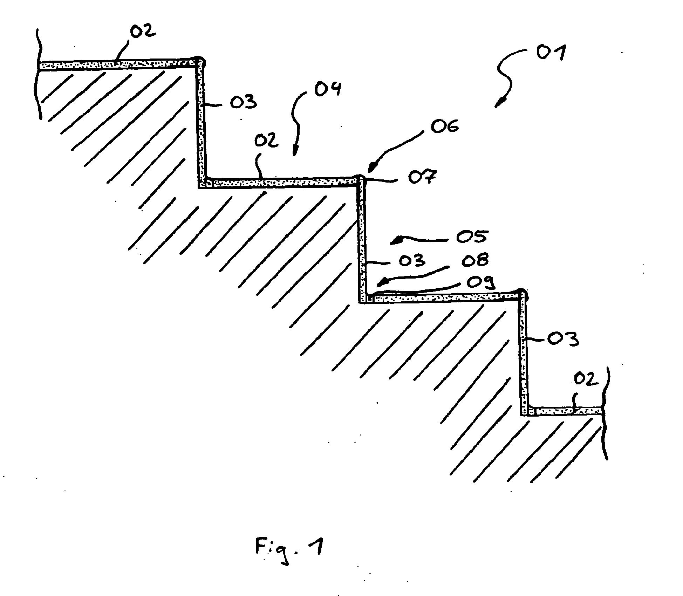

In **Fig. 1** ist eine Treppe 01 im Ausschnitt dargestellt. Die Sichtflächen der Treppe 01 sind mit Verkleidungselementen 02 und 03 überdeckt. Die Verkleidungselemente 02 verlaufen im Wesentlichen horizontal und sind jeweils auf Trittstufen 04 befestigt. Die Verkleidungselemente 03 verlaufen im Wesentlichen vertikal und sind jeweils an Setzstufen 05 befestigt.

Die Verkleidungselemente 02 und 03 sind aus einer Granulatschicht hergestellt, die mit einem Bindemittel, beispielsweise einem Polyurethanharzkleber, gebunden ist, und aus mineralischen substanzen besteht sowie offenporig und damit wasserdurchlässig ist. Auf Grund der Harzkleberbindung sind die Verkleidungselemente elastisch biegsam und können sich an jegliche Unebenheiten der darunter liegenden Treppenoberfläche anformen. Das Granulat der Verkleidungselemente 02 und 03 kann aus verschiedenen Anteilen von Quarzgranulat, Granitgranulat oder Marmorgranulat bestehen. Auf Grund der gewählten Körnung von beispielsweise 2 mm wird die offenporige Struktur an den Verkleidungselementen 02 und 03 erreicht, durch die Oberflächenwasser nach unten versickern kann. An der Unterseite der Verkleidungselemente 02 und 03 sind jeweils Rückenschichten aus verrottungsfestem Gewebepapier aufgeklebt.

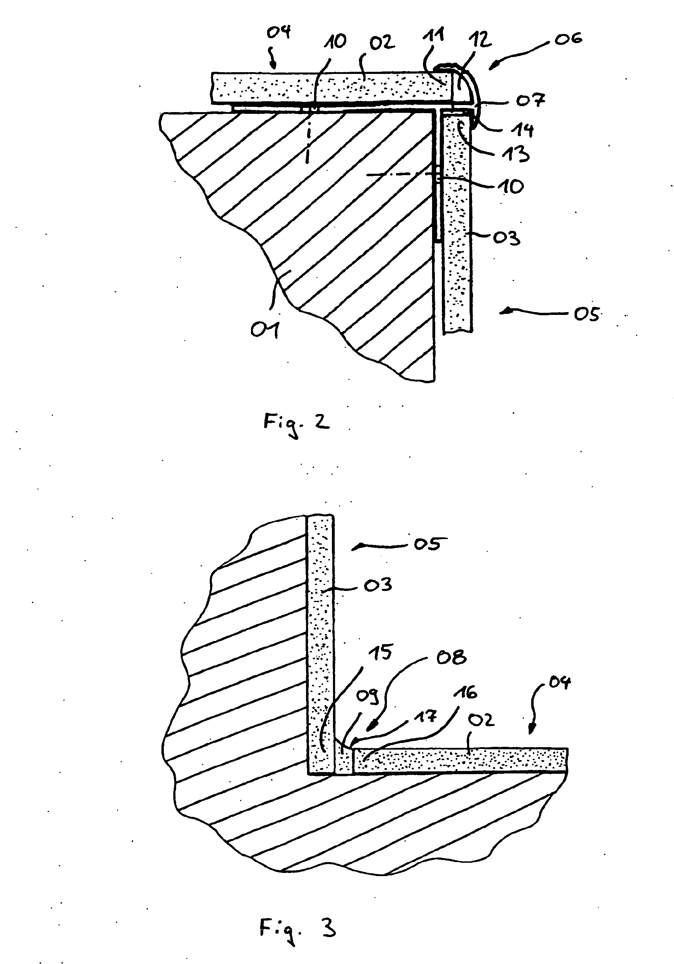

Zur Befestigung der Verkleidungselemente 02 und 03 werden die Verkleidungselemente 02 und 03 an der nicht sichtbaren Innenseite, d.h. auf der Seite mit der aufgeklebten Rückenschicht, mit einem Harzkleber bestrichen und vollflächig mit der Treppenoberfläche verklebt. Zur Befestigung und zum Schutz der Seitenkanten der Verkleidungselemente 02 und 03 im Bereich der Trittkanten 06 der Treppe 01 dienen Profilleisten 07. Außerdem ist der Übergangsbereich zwischen den Verkleidungselementen 02 und 03 an den Innenkanten 08 mit einem härtbaren Füllstoff 09 ausgefüllt. Die Befestigung mit der Profilleiste 07 und die Anbringung des Füllstoffs 09 wird nachfolgend an Hand der Zeichnungen **Fig. 2** und **Fig. 3** näher erläutert.

In **Fig. 1** ist die Treppe 01 vergrößert im Bereich der Trittkante 06 im Querschnitt dargestellt. Die Profilleiste 07 weist an ihren Querschenkeln Bohrungen 10 auf, so dass die Profilleiste 07 mittels Schrauben an der Treppe 01 befestigt werden kann. Die Vorderkante 11 des die Trittstufe 04 abdeckenden Verkleidungselements 02 wird in einen ersten Befestigungsprofilabschnitt 12 der Profilleiste 11 eingesteckt und dort festgelegt. Die Oberkante 13 des die Setzstufe 05 abdeckenden Verkleidungselements 03 wird in einen zweiten Befestigungsprofilabschnitt 14 der Profilleiste 07 eingesteckt.

Wie aus **Fig. 3** ersichtlich, kommt die Unterkante 15 des die Setzstufe 05 abdeckenden Verkleidungselements 03 an der Oberseite der darunter liegenden Trittstufe 04 zur Anlage. Die Hinterkante 16 des die Trittstufe 04 abdeckenden Verkleidungselements 02 liegt der Vorderseite des die Setzstufe 05 abdeckenden Verkleidungselements 03 gegenüber und bildet dabei einen schmalen Spalt 17. Dieser Spalt 17 ist mit dem Füllstoff 09 ausgespachtelt. Da der Füllstoff 09 aus dem gleichen Granulatmaterial wie die Verkleidungselemente 02 und 03 besteht, kann der Übergang zwischen den Verkleidungselementen 02 und 03 an den Innenkanten 08 optisch kaum mehr unterschieden werden.

Bei der Montage der Treppenstufenverkleidung wird wie folgt vorgegangen. Zunächst wird die Profilleiste 05 an der Treppe 01 befestigt. Sodann werden die Verkleidungselemente 02 und 03 entsprechend dem Einbaumaß zugeschnitten. Zunächst werden dann die den Setzstufen 05 zugeordneten Verkleidungselemente durch Einstecken der jeweiligen Oberkante 13 in den jeweils zugeordneten Befestigungsprofilabschnitt 14 der Profilleisten 07 eingesteckt und außerdem die nicht sichtbare Seite mit einem Kleber auf der Treppenoberfläche vollflächig verklebt. Anschließend werden die den Trittstufen 04 zugeordneten Verkleidungselemente 02 und 03 in dem Befestigungsprofilabschnitt 12 der Profilleiste 07 festgelegt und ebenfalls vollflächig mit der Treppenoberseite verklebt. Am Schluss wird der Übergang zwischen den Verkleidungselementen 02 und 03 im Bereich der Innenkanten 08 mit dem Füllstoff 09 ausgespachtelt.

## Patentansprüche

1. Treppenstufenverkleidung mit Verkleidungselementen (02, 03) zur zumindest teilweisen Verkleidung der Sichtflächen an einer Treppe (01)mit Trittstufen (04) und/oder Setzstufen (05), wobei die Verkleidungselemente (02, 03) auf der Sichtseite der Trittstufen (04) und/oder Setzstufen (05) befestigbar sind, und wobei die Verkleidungselemente (02, 03) in Form einer Granulatschicht aufgebaut sind, die mineralische Substanzen umfasst, wobei die Anordnung und Bindung des mineralischen Granulats offenporig und damit wasserdurchlässig ist, und wobei das mineralische Granulat mittels eines Bindemittels gebunden ist
**dadurch gekennzeichnet,**
**dass** das mineralische Granulat mittels des Bindemittels derart gebunden ist, dass die Granulatschicht elastisch verformbar ist.

2. Treppenstufenverkleidung nach Anspruch 1,
**dadurch gekennzeichnet,**
**dass** sie eine Profilleiste (07) mit zumindest einem Befestigungsprofilabschnitt (12, 14) aufweist, die an der Trittkante (06) der Trittstufe befestigbar, insbesondere anschraubbar, ist, wobei die Vorderkante (11) des auf der Trittstufe (04) zu befestigenden Verkleidungselements (02) in dem dafür vorgesehenen Befestigungsprofilabschnitt (12) der Profilleiste (07) festgelegt werden kann, und/oder wobei die Oberkante (13) des an der Setzstufe (05) befestigten Verkleidungselements (03) in dem dafür vorgesehenen Befestigungsprofilabschnitt (14) der Profilleiste (07) festgelegt werden kann.

3. Treppenstufenverkleidung nach Anspruch 2,
**dadurch gekennzeichnet,**
**dass** die Profilleiste (07) aus Aluminium hergestellt ist.

4. Treppenstufenverkleidung nach einem der Ansprüche 1 bis 3,
**dadurch gekennzeichnet,**
**dass** unter der Granulatschicht eine folien-, vlies- oder textilartige Rückenschicht angeordnet ist, wobei Granulatschicht und Rückenschicht miteinander verbunden, insbesondere verklebt, sind.

5. Treppenstufenverkleidung nach Anspruch 4,
**dadurch gekennzeichnet,**
**dass** die Rückenschicht derart ausgebildet ist, dass sie mit einfachen Schneidwerkzeugen, insbesondere einem Teppichmesser, durchtrennbar ist.

6. Treppenstufenverkleidung nach Anspruch 4 oder 5,
**dadurch gekennzeichnet,**
**dass** die Rückenschicht aus verrottungsfestem Gewebepapier besteht.

7. Treppenstufenverkleidung nach einem der Ansprüche 1 bis 6,
**dadurch gekennzeichnet,**
**dass** die Granulatschicht Quarzgranulat und/oder Granitgranulat und/oder Marmorgranulat enthält.

8. Treppenstufenverkleidung nach einem der Ansprüche 1 bis 7,
**dadurch gekennzeichnet,**
**dass** die Granulatschicht Granulatanteile mit unterschiedlichen Farben enthält.

9. Treppenstufenverkleidung nach einem der Ansprüche 1 bis 8,
**dadurch gekennzeichnet,**
**dass** die Granulatschicht Granulatanteile mit einer Körnung im Bereich von 0,2 mm bis 1,0 mm und/oder 1 mm bis 2 mm und/oder 2 mm bis 4 mm und/oder 4 mm bis 6 mm enthält.

10. Treppenstufenverkleidung nach einem der Ansprüche 1 bis 9,
**dadurch gekennzeichnet,**
**dass** der als Bindemittel eingesetzte Reaktionsharzkleber auf Polyester-, Epoxid- oder Polyurethanbasis beruht.

11. Treppe mit einer Treppenstufenverkleidung nach einem der Ansprüche 1 bis 10,
**dadurch gekennzeichnet,**
**dass** die Unterkante (15) des an der Setzstufe (05) befestigten Verkleidungselements (03) an der Oberseite der darunter liegenden Trittstufe (02) zur Anlage kommt oder nur einen geringen, unausgefüllten Abstand zur Trittstufe (02) aufweist, wobei zwischen der Hinterkante (16) des auf der Trittstufe (04) befestigten Verkleidungselements (02) und der Vorderseite des an der Setzstufe (05) befestigten Verkleidungselements (03) ein geringfügiger Spalt (17) gebildet wird.

12. Treppe mit einer Treppenstufenverkleidung nach einem der Ansprüche 1 bis 11,
**dadurch gekennzeichnet,**
**dass** die Trittstufen (04) und/oder Setzstufen (05) der Treppe (01) mit den Verkleidungselementen (02, 03), insbesondere vollflächig, verklebt sind.

13. Treppe nach Anspruch 12,
**dadurch gekennzeichnet,**
**dass** der Kleber zur Verklebung der Verkleidungselemente (02, 03) auf Polyurethanbasis beruht.

14. Treppe mit einer Treppenstufenverkleidung nach einem der Ansprüche 1 bis 10,
**dadurch gekennzeichnet,**
**dass** der Übergang an der Innenkante (08) zwischen dem an der Setzstufe (05) befestigten Verkleidungselement (03) und dem an der darunter liegenden Trittstufe (04) befestigten Verkleidungselement (02) mit einem Füllstoff (09) ausgefüllt ist.

15. Treppe nach Anspruch 14,
**dadurch gekennzeichnet,**
**dass** der Füllstoff (09) aus einem Granulatmaterial aufgebaut ist, das im Wesentlichen dem Granulatmaterial der Verkleidungselemente entspricht.

16. Treppe nach Anspruch 15,
**dadurch gekennzeichnet,**
**dass** das im Füllstoff (09) enthaltene Granulatmaterial mit einem Bindemittel, insbesondere mit einem Reaktionsharzkleber, formstabil gebunden ist.

17. Treppe mit einer Treppenstufenverkleidung nach einem der Ansprüche 1 bis 10,
**dadurch gekennzeichnet,**
**dass** die Treppe (01) aus Beton oder einem ähnlichen Baustoff besteht.

18. Verwendung einer Treppenstufenverkleidung nach einem der Ansprüche 1 bis 10,
**dadurch gekennzeichnet,**
**dass** die Treppenstufenverkleidung an einer Treppe (01) befestigt ist, die im der Witterung ausgesetzten Außenbereich oder in einem Feuchtraum angeordnet ist.

## Claims

1. Stair tread lining with lining elements (02, 03) for the at least partial lining of the visible surfaces on a staircase (01), with stair treads (04) and/or risers (05), wherein the lining elements (02, 03) can be fastened on the visible side of the stair treads (04) and/or risers (05), wherein the lining elements (02, 03) are constructed in the form of a granulate layer comprising mineral substances, wherein the arrangement and binding of the mineral granulate has open pores and is therefore water permeable, and wherein the mineral granulate is bound by means of a binder,
**characterised in that**
the mineral granulate is bound by means of the binder in such a manner that the granulate layer is elastically deformable.

2. The stair tread lining according to Claim 1,
**characterised in that**
it has a profile strip (07) with at least one fastening profile section (12, 14) which can be fastened, in particular screwed to the tread edge (06) of the stair tread, wherein the front edge (11) of the lining element (02) to be fastened to the stair tread (04) can be located in the fastening profile section (12) of the profile strip (07) provided for this purpose, and/or wherein the upper edge (13) of the lining element (03) fastened to the riser (05) can be located in the fastening profile section (14) of the profile strip (07) provided for this purpose.

3. The stair tread lining according to Claim 2,
**characterised in that**
the profile strip (07) is manufactured from aluminium.

4. The stair tread lining according to one of Claims 1 to 3,
**characterised in that**
a film, nonwoven or textile rear layer is arranged underneath the granulate layer, wherein the granulate and rear layers are connected, in particular glued together.

5. The stair tread lining according to Claim 4,
**characterised in that**
the rear layer is designed so that it can be separated with simple cutting tools, in particular a carpet knife.

6. The stair tread lining according to Claim 4 or 5,
**characterised in that**
the rear layer consists of rot-proof tissue paper.

7. The stair tread lining according to one of Claims 1 to 6,
**characterised in that**
the granulate layer contains quartz granulate and/or granite granulate and/or marble granulate.

8. The stair tread lining according to one of Claims 1 to 7,
**characterised in that**
the granulate layer contains granulate portions of different colours.

9. The stair tread according to one of Claims 1 to 8,
**characterised in that**
the granulate layer contains granulate portions with a granulation ranging from 0.2 mm to 1.0 mm and/or 1 mm to 2 mm and/or 2 mm to 4 mm and/or 4 mm to 6 mm.

10. The stair tread lining according to one of Claims 1 to 9,
**characterised in that**
the reaction resin adhesive used as a binder has a polyester, epoxy or polyurethane base.

11. A staircase with a stair tread lining according to one of Claims 1 to 10,
**characterised in that**
the lower edge (15) of the lining element (03) fastened to the riser (05) bears against the upper side of the riser (02) lying below it, or lies only a short, unfilled distance from the stair tread (02), wherein a small gap (17) is formed between the rear edge (16) of the lining element (02) fastened to the stair tread (04) and the front side of the lining element (03) fastened to the riser (05).

12. The staircase with a stair tread lining according to one of Claims 1 to 11,
**characterised in that**
the stair treads (04) and/or risers (05) of the staircase (01) are glued to the lining elements (02, 03), in particular over the entire surface.

13. The staircase according to Claim 12,
**characterised in that**
the adhesive for gluing the lining elements (02, 03) is based on polyurethane.

14. The staircase with a stair tread lining according to one of Claims 1 to 10,
**characterised in that**
the transition at the inner edge (08) between the lining element (03) fastened to the riser (05) and the lining element (02) fastened to the underlying stair tread (04) is filled with a filler (09).

15. The staircase according to Claim 14,
**characterised in that**
the filler (09) is constructed from a granulate material which corresponds essentially to the granulate material of the lining elements.

16. The staircase according to Claim 15,
**characterised in that**
the granulate material contained in the filler (09) is bound in a dimensionally stable manner with a binder, in particular with a reaction resin adhesive.

17. The staircase with a stair tread lining according to one of claims 1 to 10,
**characterised in that**
the staircase (01) consists of concrete or similar building material.

18. The use of a stair tread lining according to one of Claims 1 to 10,
**characterised in that**
the stair tread lining is fastened to a staircase (01) which is arranged in the outer region exposed to the weather or in a damp room.

## Revendications

1. Revêtement de marches d'escalier avec des éléments de revêtement (02, 03), pour le revêtement au moins partiel des surfaces visibles d'un escalier (01), avec des marches (04) et/ou des contremarches (05), les éléments de revêtement (02, 03) pouvant être fixés sur le côté visible des marches (04) et/ou des contremarches (05), et les éléments de revêtement (02, 03) étant constitués sous la forme d'une couche de granulat qui comprend des substances minérales, l'agencement et la liaison chimique du granulat minéral étant à pores ouverts et donc perméables, et le granulat minéral étant lié au moyen d'un liant,
**caractérisé en ce que**
le granulat minéral est lié de telle façon au moyen du liant, que la couche de granulat peut être déformée de manière élastique.

2. Revêtement de marches d'escalier selon la revendication 1,
**caractérisé en ce que**
il comporte une baguette profilée (07) avec au moins une section de profilé de fixation (12, 14) pouvant être fixée sur le nez-de-marche (06) de la marche, notamment par vissage, l'arête frontale (11) de l'élément de revêtement (02) à relier à la marche (04) pouvant être fixée dans la section de profilé de fixation (12) de la baguette profilée (07) prévue à cet effet, et/ou l'arête supérieure (13) de l'élément de revêtement (03) relié à la contre-marche (05) pouvant être fixée dans la section de profilé de fixation (14) de la baguette profilée (07) prévue à cet effet.

3. Revêtement de marches d'escalier selon la revendication 2,
**caractérisé en ce que**
la baguette profilée (07) est fabriquée en aluminium.

4. Revêtement de marches d'escalier selon l'une des revendications 1 à 3,
**caractérisé en ce que**
une couche dorsale conçue comme du textile, comme un non-tissé ou comme un film est placée en dessous de la couche de granulat, la couche dorsale et la couche de granulat étant reliées entre elles, notamment par collage.

5. Revêtement de marches d'escalier selon la revendication 4,
**caractérisé en ce que**
la couche dorsale est conçue de façon à pouvoir être découpée facilement à l'aide d'outils de découpage, notamment à l'aide d'un couteau à tapis.

6. Revêtement de marches d'escalier selon la revendication 4 ou 5,
**caractérisé en ce que**
la couche dorsale est constituée d'un papier résistant à l'usure.

7. Revêtement de marches d'escalier selon l'une des revendications 1 à 6,
**caractérisé en ce que**
la couche de granulat contient du granulat de quartz et/ou du granulat de granit et/ou du granulat de marbre.

8. Revêtement de marches d'escalier selon l'une des revendications 1 à 7,
**caractérisé en ce que**
la couche de granulat contient des composants de granulat de différentes couleurs.

9. Revêtement de marches d'escalier selon l'une des revendications 1 à 8,
**caractérisé en ce que**
la couche de granulat contient des composants de granulat ayant une granulation entre 0,2 mm et 1,0 mm et/ou entre 1 mm et 2 mm et/ou entre 2 mm et 4 mm et/ou entre 4 mm et 6 mm.

10. Revêtement de marches d'escalier selon l'une des revendications 1 à 9,
**caractérisé en ce que**
la colle de résine réactive est à base de polyester, d'époxyde ou de polyuréthane.

11. Escalier avec un revêtement de marches d'escalier selon l'une des revendications 1 à 10,
**caractérisé en ce que**
l'arête inférieure (15) de l'élément de revêtement (03) fixé sur la contremarche (05) est installée sur le côté supérieur de la marche se trouvant en dessous (02) ou ne présente qu'un écart restreint et non occupé par rapport à la marche (02), une légère fente (17) étant formée entre l'arête arrière (16) de l'élément de revêtement (02) fixé sur la marche (04) et le côté avant de l'élément de revêtement (03) fixé sur la contremarche (05).

12. Escalier avec un revêtement de marches d'escalier selon l'une des revendications 1 à 11,
**caractérisé en ce que**
les éléments de revêtement (02, 03) sont collés sur les marches (04) et/ou les contremarches (05) de l'escalier (01), notamment sur l'ensemble de leur surface.

13. Escalier selon la revendication 12,
**caractérisé en ce que**
la colle servant à coller les éléments de revêtement (02, 03) est à base de polyuréthane.

14. Escalier avec un revêtement de marches d'escalier selon l'une des revendications 1 à 10,
**caractérisé en ce que**
la transition au niveau de l'arrête interne (08) entre l'élément de revêtement (03) fixé sur la contremarche (05) et l'élément de revêtement (02) fixé sur la marche (04) située en dessous est remplie d'un corps de remplissage (09).

15. Escalier selon la revendication 14,
**caractérisé en ce que**
le corps de remplissage (09) est conçu d'un granulat correspondant essentiellement au granulat des éléments de revêtement.

16. Escalier selon la revendication 15,
**caractérisé en ce que**
le granulat contenu dans le corps de remplissage (09) est lié de façon indéformable à l'aide d'un liant, notamment à l'aide d'une colle à base de résine réactive.

17. Escalier avec un revêtement de marches d'escalier selon l'une des revendications 1 à 10,
**caractérisé en ce que**
l'escalier (01) est constitué de béton ou d'un matériau de construction similaire.

18. Utilisation d'un revêtement de marches d'escalier selon l'une des revendications 1 à 10,
**caractérisée en ce que**
le revêtement de marches d'escalier est fixé sur un escalier (01) qui est installé dans une zone extérieure exposée aux intempéries ou bien dans une pièce humide.
